(19) Europäisches Patentamt
European Patent Office
Office européen des brevets

(11) **EP 3 770 836 A1**

(12) **EUROPEAN PATENT APPLICATION**
published in accordance with Art. 153(4) EPC

(43) Date of publication:
**27.01.2021 Bulletin 2021/04**

(51) Int Cl.:
***G06Q 10/10*** *(2012.01)*

(21) Application number: **18910853.3**

(22) Date of filing: **21.08.2018**

(86) International application number:
**PCT/JP2018/030830**

(87) International publication number:
**WO 2019/180986 (26.09.2019 Gazette 2019/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.03.2018 JP 2018052946**

(71) Applicant: **Forum Engineering Inc.
Tokyo, 105-0001 (JP)**

(72) Inventor: **TAKEUCHI, Masahiro
Tokyo 105-0001 (JP)**

(74) Representative: **J A Kemp LLP
14 South Square
Gray's Inn
London WC1R 5JJ (GB)**

(54) **MATCHING DEVICE USING SYLLABUSES**

(57) The present disclosure relates to a matching apparatus for calculating a matching score between a company that desires to employ a student and a student that desires to be employed, and the purpose thereof is to calculate a matching score that accurately represents the matching degree between the two by using syllabuses of respective subjects. A job offerer such as a company inputs required skill items by specifying corresponding dictionary nodes "1001" and "1002". All dictionary nodes are associated in advance with syllabuses having relevance thereto among the syllabuses prepared for the respective subjects. A job seeker such as a student submits information on subjects taken. Associations between the subjects taken and syllabuses thereof are stored. Based on the distribution of syllabuses "AAA", "BBB", "CCC", "DDD", "EEE", and "FFF" associated with the specified dictionary nodes "1001"and "1002" and the distribution of syllabuses of subjects taken that are submitted, calculation is performed for a matching score between an ability required by the job offerer and an ability possessed by the job seeker.

Fig. 12

## Description

## Technical Field

The present disclosure relates to a matching apparatus using syllabuses, and more particularly, to a matching apparatus using syllabuses suitable for calculating a matching score between a company that desires to employ a student and a student who desires to be employed.

## Background Art

PTL 1 (JP 2003-162651 A) discloses a system for calculating a matching score between a requirement on the side of a job offerer and a skill on the side of a job seeker based on a degree of matching between job offering information and job seeking information. In PTL 1, job offering information is provided by a job offering company that seeks human resources to perform work in the field for which it has received an order. On the other hand, job seeking information is provided by a job seeking company that can dispatch a group of human resources having knowledge in each field.

The job offering information includes, for example, items such as an industry type, an operating system (OS), a development language, a database (DB), and a development process to be used in the work. On the other hand, the job seeking information includes items such as a job type, an OS, a development language, a DB, and a development process for each computer-related job history of the job seeker.

PTL 1 discloses a method for determining matching or mismatching of each of these items and then quantifying the results as a matching score. According to such a method, it is possible to appropriately quantify affinity between the requirement of the job offering company and the skill of each job seeker who belongs to the job seeking company.

## Prior Art Documents

## Patent Document

[Patent Document 1] JP 2003-162651 A

## Disclosure of the Invention

## Problem to be Solved by the Invention

Now, when a company determines whether accepting or rejecting a student who desires to be employed, it is common that the student submits his or her academic results of the subjects taken and then the company determines whether the student has the desired ability based on the academic results. According to the method of PTL 1, for example, if a subject related to the required ability is provided as job offering information by a company and if the academic results are provided as job seeking information by a student, it is possible to calculate a matching score between the company and the student. If such a matching score is available, companies can reduce efforts required for recruitment activities and students can easily identify companies that appreciate their abilities.

However, the subjects taken by students are not necessarily the same in contents even when the subjects have the same names. For this reason, matching and mismatching between the subjects related to the ability that is required by the company and the subjects taken that are listed in the academic results of the student may not accurately represent a degree of matching between the ability required by the company and the ability possessed by the student.

The present disclosure has been made to solve the problem as described above, and the object thereof is to provide a matching apparatus for calculating a matching score that accurately represents a degree of matching between an ability required by a job offerer and an ability possessed by a job seeker by utilizing the contents of a syllabus prepared for each subject.

## Means for Solving the Problem

In order to achieve the above object, the first aspect of the present disclosure is a matching apparatus using syllabuses, comprising:

a first reception unit for generating required skill information that includes a set of skill items required by a job offerer;
a first storage unit for storing the required skill information;
a second reception unit for receiving an input of subject information that is information on subjects taken by a job seeker;

a second storage unit for storing the subject information;
a third reception unit for receiving syllabuses defined for respective subjects;
a third storage unit for storing information of a syllabus group that is a set of various syllabuses; and
a score calculation unit for calculating a matching score between an ability required by the job offerer and an ability possessed by the job seeker based on the required skill information, the subject information, and the information on the syllabus group, wherein
the score calculation unit performs:

> an extraction process for extracting a syllabus associated with each subject taken, which is included in the subject information, as a taken syllabus from the third storage unit; and
> a score calculation process for calculating the matching score based on a set of syllabus elements included in the taken syllabus as terms related to skills and the required skill information.

A second aspect of the present disclosure is the matching apparatus according to the first aspect, further comprising:

> a fourth storage unit for storing which skill group each of a plurality of predefined clusters is allocated to; and
> a fifth storage unit for storing a syllabus-cluster connection rule that defines which of the plurality of clusters each of the syllabuses is associated with, wherein
> which of the plurality of clusters each syllabus is associated with is determined based on a set of syllabus elements included in the syllabus, and
> the score calculation process includes:

> > a syllabus allocation process for allocating each taken syllabus to an appropriate cluster according to the syllabus-cluster connection rule;
> > a skill item allocation process for allocating each skill item included in the required skill information to a cluster that covers a skill group to which the skill item should belong; and
> > a calculation execution process for calculating the matching score based on a comparison between a distribution of the taken syllabuses allocated to the plurality of clusters and a distribution of the skill items.

A third aspect of the present disclosure is the matching apparatus according to the second aspect, further comprising:

> a sixth storage unit for storing a skill item-syllabus connection rule that defines which of the syllabuses each of the skill items is associated with; wherein
> whether each skill item is associated with each syllabus is determined based on whether a syllabus element corresponding to the skill item is included in the syllabus, and
> the skill item allocation process includes:

> > a skill item-syllabus connection process for associating each of the skill items included in the required skill information with a corresponding syllabus according to the skill item-syllabus connection rule;
> > a determination process for determining a cluster to be associated with the corresponding syllabus according to the syllabus-cluster connection rule; and
> > a process for allocating each of the skill items to a cluster determined by the determination process.

A forth aspect of the present disclosure is the matching apparatus according to the second or third aspect, wherein
the calculation execution process includes:

> a score allocation setting process for allocating a score allocation to each cluster based on the distribution of the skill items in such a manner the total of the score allocations allocated to all clusters becomes a full score;
> an acquisition score calculation process for calculating, for each cluster, an acquisition score based on a grade and the number of credits of the subject taken that is associated with the taken syllabus allocated to the cluster;
> a reference score calculation process for calculating, for each cluster, the acquisition score as a reference score in the case in which the grade is a reference grade and the number of credits is a reference number of credits;
> a cluster score calculation process for calculating, for each cluster, a cluster score according to the following formula, and

$$(\text{cluster score}) = (\text{score allocation}) \times (\text{acquisition score})/(\text{reference score})$$

a process for calculating a sum of the cluster scores of all clusters as the matching score.

A fifth aspect of the present disclosure is the matching apparatus according to the fourth aspect, wherein:

the required skill information includes an importance level defined for each skill item; and
the score allocation setting process includes for each skill item included in the required skill information:

a skill item point setting process for setting a skill item point in which the importance level is reflected;
a process for calculating, for each cluster, a cluster total point by totaling the skill item points; and
a process for calculating a score allocation for each cluster according to the following formula

$$(\text{score allocation}) = (\text{full score}) * (\text{cluster total point of the cluster})/(\text{sum of cluster total points of all clusters}).$$

A sixth aspect of the present disclosure is the matching apparatus according to the fifth aspect, further comprising:

a seventh storage unit for storing a dictionary node tree in which a set of the skill items are arranged in a tree structure according to relevance to skills, wherein
the skill items that the job offerer seeks include a direct skill item that is directly specified through the first reception unit, and an indirect skill item that has a close relation with the direct skill item in the dictionary node tree; and
an eighth storage unit for storing a weight applied to each of the direct skill item and the indirect skill item, wherein
the skill item point setting process further includes a process for reflecting the weight of the direct skill item in the skill item point of the direct skill item and reflecting the weight of the indirect skill item in the skill item point of the indirect skill item.

A seventh aspect of the present disclosure is the matching apparatus according to any one of claims 4 to 6, wherein
the syllabus includes information on a deviation value of an educational institution that offers the subject, and
the acquisition score calculation process includes a process for reflecting, in the acquisition score, the deviation value of the educational institution that offers the subjects taken.

An eighth aspect of the present disclosure is the matching apparatus according to any one of the fourth to seventh aspects of the present disclosure, wherein
the syllabus includes information on a difficulty level of the subject, and
the acquisition score calculation process includes a process for reflecting the difficulty level of the subject taken in the acquisition score.

**Advantages of the Invention**

According to the first aspect, a job seeker can indicate a required ability to a job seeker by specifying a skill element instead of a subject. On the other hand, the job seeker can indicate his or her own possessed ability not by a skill element but by information of subject taken. A taken syllabus associated with a subject taken is extracted in the score calculation unit. A set of syllabus elements included in the taken syllabus is a set of all skills that the job seeker has acquired through the subjects taken, and thus represents in a list of skills the ability possessed by the job seeker. On the other hand, required skill information, which is a set of skill items required by the job offerer, represents in a list of skills the ability required by the job offerer in a list of skills. For this reason, according to the present aspect that calculates a matching score based on both of them, it is possible to calculate a matching score that accurately represents matching between the ability required by the job offerer and the ability possessed by the job seeker.

According to the second aspect, each syllabus is allocated to any one of the clusters based on a set of syllabus elements included in the each syllabus. In a case where the syllabus has a description such as "In this class, you will learn XX instead of YY", YY will not be covered in the class but may be taken up as a syllabus element because it is a term related to a skill. Even in such a case, generally, since a majority of syllabus elements are terms related to the skills that are covered in the class, the syllabus and the cluster can be accurately associated with each other. In the present aspect, when a job seeker specifies a subject taken, the taken syllabus associated with the subject taken is allocated to any one of the clusters. As described above, the syllabus and the cluster are accurately associated with each other. For this reason, a distribution of taken syllabuses across a plurality of clusters accurately represent a distribution of the subjects taken by the job seeker across these clusters, that is, a distribution of the abilities possessed by the job seeker. When a skill item specified by the job offerer and a syllabus element associated with the subject taken by the job seeker are directly compared with each other, an erroneous matching determination may be made regarding the skill related to the term such as the above-mentioned YY. By contrast, in the present aspect, the ability required by the job offerer and the ability possessed by the job seeker are determined based on the distributions of both of them across the plurality of clusters. In this case, since an error caused by the term such as the above-mentioned YY does not occur, a more accurate matching score can be obtained.

According to the third aspect, a skill item is associated with a syllabus in which a related syllabus element is included. Each syllabus is associated with any one of the clusters based on the syllabus element. In the present aspect, by linking the above two associations, each skill item can be associated with any one of the clusters. For this reason, according to the present aspect, it is possible to accurately generate the distribution of the skill items required by the job offerer across the plurality of clusters by using a simple process.

According to the fourth aspect, a score allocation for each cluster is calculated based on a distribution of skill items. Then, a cluster score for each cluster is calculated by an arithmetic formula of (score allocation) x (acquisition score)/(reference score). It can be estimated that a degree of mastering of a skill related to the target cluster is higher as the numbers of credits of the subjects taken that belong to the cluster are larger and as grades of these subjects taken are better. In the present aspect, since the "acquisition score" is calculated based on the numbers of credits and the grades of the subjects taken that are associated with the target cluster, the value represents a degree of mastering of the skills related to the cluster. The reference score is an acquisition score corresponding to the reference grade and the reference number of credits. Therefore, in the above arithmetic formula, the portion of (acquisition score)/(reference score) is equal to the ratio expressed by (a degree of mastering of the job offerer)/(reference degree of mastering). In the above arithmetic formula, the (score allocation) is an importance level of the cluster as seen from the job offerer. For this reason, according to the above arithmetic formula, a numerical value reflecting the importance level of the cluster and the degree of mastering by the job seeker with respect to the cluster is a cluster score. According to the present aspect, by using the sum of such cluster scores as a matching score, it is possible to accurately quantify matching between the ability required by the job offerer and the ability possessed by the job seeker.

According to the fifth aspect, a job offerer can specify the importance level for each skill item. Then, in the present aspect, for each skill item, a skill item point in which the importance level thereof is reflected is set and the sum of the skill item points associated with the respective clusters is further set as a cluster total point. Using the cluster total point set in this way, if the (score allocation) is calculated by the arithmetic formula of (full score)*(cluster total point of the cluster)/(sum of cluster total points of all clusters), the importance level given to each skill item can be appropriately reflected in the (score allocation).

According to the sixth aspect, skill items are arranged in a tree form by a dictionary node tree. When a job offerer specifies a skill item on the dictionary node, the skill item is recognized as a direct skill item, and a skill item having a close relation with the direct skill item in the tree structure is recognized as an indirect skill item. Then, the direct skill item and the indirect skill item are each associated with any one of the clusters through syllabuses. Thereby, according to the present aspect, it is possible to represent the ability required by the job offerer by a distribution that also includes an indirect skill item. Furthermore, in the present aspect, the skill item point of the direct skill item is given a weight that is appropriate to "direct", and the skill item point of the indirect skill item is given a weight that is appropriate to "indirect". For this reason, in the (score allocation) calculated in the present aspect, the existence or non-existence of the direct skill item is more greatly reflected than the existence or non-existence of the indirect skill item. As a result, it is possible to set the (score allocation) that accurately reflects the intention of the job offerer.

According to the seventh aspect, a deviation value of an educational institution that has offered a subject taken can be reflected in an acquisition score of a job seeker. In general, the degree of mastering of a subject taker with respect to a subject has correlation with the level of the educational institution that offers the subject, that is, a deviation value thereof. According to the present aspect, by reflecting the effect of the deviation value in the acquisition score, the accuracy of the matching score can be further improved.

According to the eighth aspect, a difficulty level of a subject taken can be reflected in an acquisition score of a job seeker. In general, a degree of mastering of a subject taker with respect to a subject increases as a difficulty level of the subject increases. According to the present aspect, by reflecting the effect of the difficulty level of the subject taken in the acquisition score, the accuracy of the matching score can be further improved.

**Brief Description of the Drawings**

Fig. 1 is a diagram for describing an overview of a network including a matching apparatus according to a first embodiment of the present disclosure;

Fig. 2 is a diagram showing a hardware configuration of the management server;

Fig. 3 is a diagram showing an example of an input screen by which a student who is a job seeker inputs his subject grades;

Fig. 4 is a diagram showing an example of a dictionary node tree including a set of skill items, organized in a tree structure according to their skill relevance;

Fig. 5 is a diagram showing an example of information which is input by a job seeker for identifying a required ability;

Fig. 6 shows a partial information included in a syllabus issued for each subject by an university which is an educational institution;

Fig. 7 is a diagram showing an example of sentences provided as a class outline, a learning goal, a class plan, or the likes among the items shown in FIG. 6;

Fig. 8 is a diagram for describing an association between a syllabus and a dictionary node of a dictionary tree;

Fig. 9 is a diagram showing a list of a plurality of clusters in which skill items required by a job offerer as well as subjects taken by a job seeker are allocated in first embodiment of the present disclosure;

Fig. 10 is a diagram for describing the association between the syllabus and the cluster;

Fig. 11 is a diagram for describing a method for allocating subjects taken by a job seeker to a plurality of clusters;

Fig. 12 is a diagram showing an specific example of the association between a syllabus and a dictionary node in a dictionary node tree;

Fig. 13 is a diagram for describing a method for allocating skill items (dictionary nodes) specified by a job offerer to a plurality of clusters;

Fig. 14 is a diagram for describing a method for calculating a score to be given to each of a plurality of clusters;

Fig. 15 is a diagram for describing a preparation process for calculating an acquisition score possessed by a job seeker for a specific cluster; and

Fig. 16 is a diagram for describing a method for calculating a cluster score for a specific cluster.

**Description of Embodiments**

First embodiment

[Configuration of first embodiment]

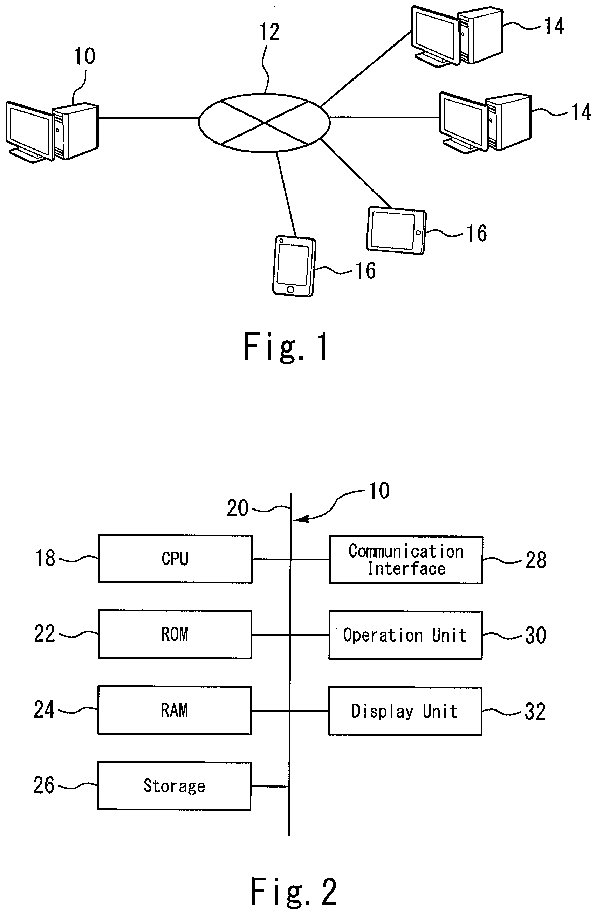

Fig. 1 is a diagram for describing an overview of a network including a matching apparatus according to a first embodiment of the present disclosure. The matching apparatus of the present embodiment includes a management server 10. The management server 10 is connected to a plurality of terminals 14 and 16 via a network 12. In Fig. 1, the terminal denoted by a reference sign 14 is a terminal of a company that is a job offerer that recruits human resources. Furthermore, the terminal denoted by a reference sign 16 is a terminal of a job seeker such as a student who desires to be employed. Hereinafter, these are referred to as the "job offerer terminal 14" and the "job seeker terminal 16".

Fig. 2 shows a hardware configuration of the management server 10. The management server 10 is configured with a general computer system and includes a central processor (CPU) 18. Memories such as a ROM 22, a RAM 24, and a storage 26 are connected to the CPU 18 via a communication bus 20. A communication interface 28, and an operation unit 30 and a display unit 32 serving as user interfaces are further connected to the communication bus 20. The management server 10 implements a function as a matching apparatus when the CPU 18 executes a program stored in the ROM 22.

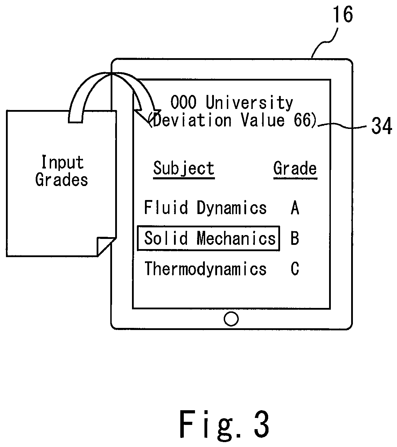

Fig. 3 shows an example of a grade input screen 34 displayed on the job seeker terminal 16. In the present embodiment, a student who is a job seeker is required to input subject information including a university name, names of subjects taken, a grade for each subject, and the like on the screen 34. The grade input screen 34 shown in Fig. 3 displays a deviation value of the university. This deviation value information is provided from the management server 10 to the job seeker terminal 16 in response to the university name that is input.

In addition to the information shown in Fig. 3, in the grade input screen 34, information such as the number of credits given to each subject, the difficulty level of each subject, and in how many levels the grade is evaluated may be input. Furthermore, the difficulty level of a subject may be replaced with information in what year of school the subject is offered. In this case, it is determined that the subject offered in the senior year of school has the higher difficulty level.

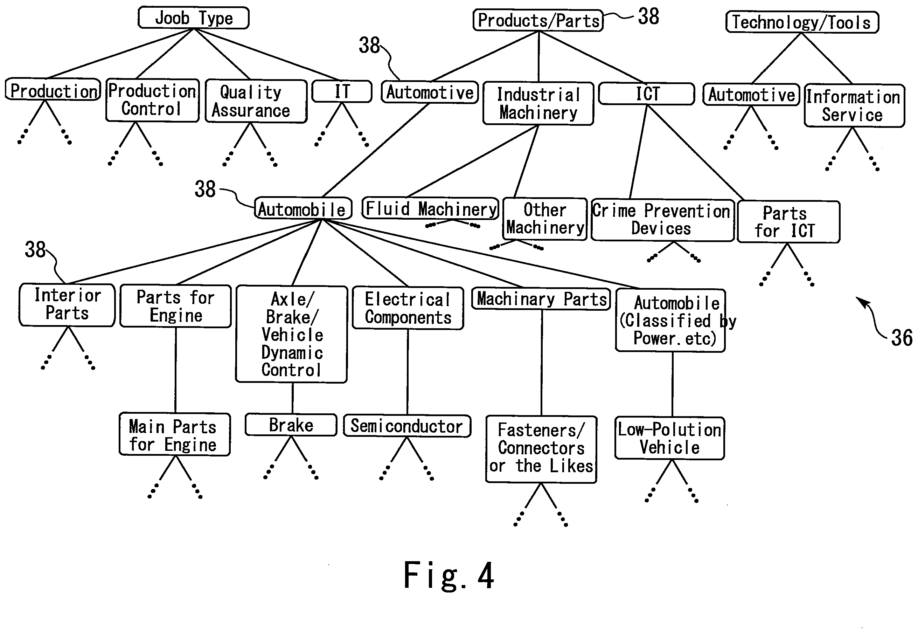

Fig. 4 shows an example of a dictionary node tree 36 stored in the management server 10. The dictionary node tree includes a plurality of dictionary nodes 38 hierarchized in a tree structure. Any one of the dictionary nodes 38 has a meaning as an item representing the contents or the field of the skill (hereinafter, referred to as a "skill item"), and is arranged according to a relation such as a superordinate concept and a subordinate concept, or the whole and a part. For example, several dictionary nodes 38 of products and parts including "Automotive" are associated with the dictionary node 38 of "Product/Part". Further, several dictionary nodes 38 of elements related to automobiles including "interior parts" are associated with the dictionary node 38 of "Automotive". Each of the dictionary nodes 38 is given a unique code such as "1001" and "1002", although the description thereof is omitted in Fig. 4.

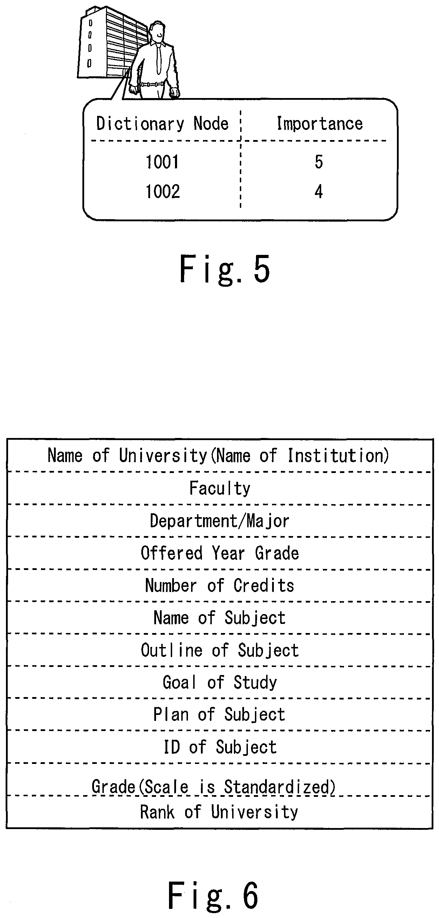

Fig. 5 shows an example of required skill information that the company that is a job offerer provides to clarify the ability (hereinafter, referred to as "a required ability") required of a job seeker for a specific job offer. This required skill information is input from the job offerer terminal 14. In the present embodiment, the job offerer is required to specify a required skill item for each job offer in the dictionary node 38 and to specify the importance level of each skill item. In an example of the job offer shown in Fig. 5, the skill item corresponding to the dictionary node "1001" is required with the importance level of "5", and the skill item corresponding to the dictionary node "1002" is required with the importance level of "4". There are five levels from 1 to 5 in the importance, and the importance level increases as the numerical value increases.

Generally, it is difficult for a job seeker such as a student who does not have social experiences to clarify the skill possessed by himself or herself. For this reason, a student who desires to be employed usually submits information of their subject taken as shown in Fig. 1 to the company. On the other hand, the company that is a job offerer usually sets employment conditions of the job offerer by focusing on skill items as shown by the dictionary nodes 38 in Fig. 4. Then, in the recruiting activities of the company, whether the ability possessed by the student meets the requirement of the company is determined by estimating the degree of mastering of the required skill based on the subjects taken and the grades thereof of the student.

However, even if the subject name is the same, the substance of the subject may be different if the educational institution that offers the subject is different, for example. For this reason, if a job offerer determines the ability of the job seeker by focusing on the subject taken itself, the company may employ a job seeker having a low level of aptitude, or may reject a job seeker having a high level of aptitude.

Fig. 6 lists examples of information included in a syllabus stored in the management server 10 in the present embodiment. The educational institution such as a university prepares a syllabus that summarizes an outline and a goal of a subject for each subject offered to students. In the present embodiment, the management server 10 stores information of a huge number of syllabuses issued by a lot of universities and the like for each subject. However, the information of syllabuses is not necessarily stored in the management server 10 as long as an administrator of the management server 10 can access the information as needed from the management server 10 or another computer.

In the items listed in Fig. 6, "Offered Year Grade" indicates in what year of school the subject related to this syllabus is offered to students. In the present embodiment, it is determined that the difficulty level of a subject is higher as the offered year grade is higher. In the items shown in Fig. 6, "Grade (Scale is Standardized)" is information relating to how many levels the grade of the subject related to this syllabus is evaluated in. The subject grade may be shown in four levels, such as excellent(A), good(B), acceptable(C), or failure(D), or in more levels. The information in this column is used to align various grades evaluated by different rules into a comparable state. This information may be supplemented by a job offerer such as a student or the like.

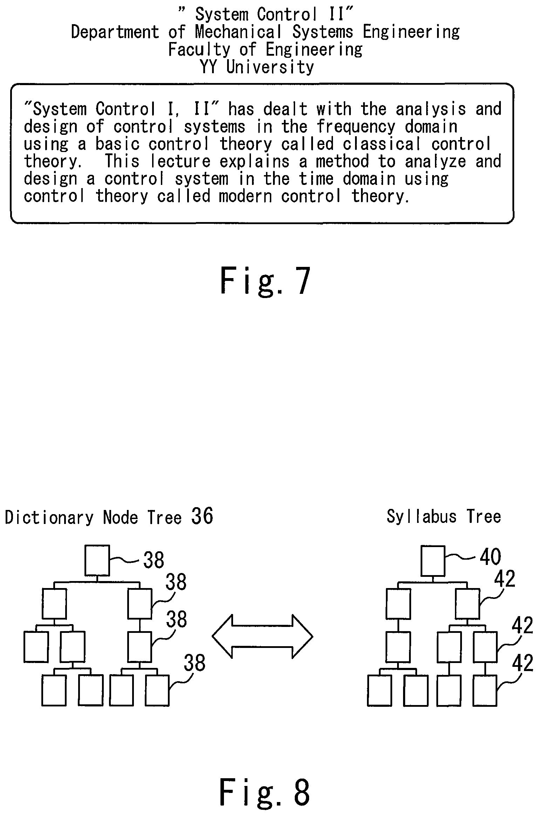

Fig. 7 shows an example of the "outline" of a subject included in the syllabus. This example shows the outline of "System Control II" of Department of Mechanical System Engineering, Faculty of Engineering, YY University. Referring to such a syllabus when evaluating subject information submitted by a job seeker, the substance of each subject taken can be accurately identified. Then, if the substance of the subject taken is accurately identified, it is possible to accurately determine how much the subject taken by the job seeker covers the skill item group required by the job offerer. Therefore, in the present embodiment, the required skill information provided by the company or the like and the subject information submitted by the student or the like are compared with each other through the information in the syllabuses, and the matching score between the two is obtained from the comparison results. Hereinafter, the contents of the specific processes performed in the present embodiment to calculate the matching score will be described.

Fig. 8 is a diagram for describing an association between a dictionary node tree 36 and a syllabus 40. Specifically, a syllabus tree shown on the right side of Fig. 8 represents in a tree structure a plurality of syllabus elements 42 included in the single syllabus 40. One syllabus 40 includes various keywords related to skills. Here, such a keyword is referred to as a "syllabus element". For example, the syllabus shown in Fig. 7 includes syllabus elements such as a "system control", a "classical control theory", a "control theory", a "control system", a "frequency domain", an "method to analyze", "design", a "modern control theory", a "time domain" and an "analyze". Such syllabus elements 42 can be extracted from the syllabus 40 using an existing software, and arranged as shown in Fig. 8.

On the left side of Fig. 8, the dictionary node tree 36 having the plurality of dictionary nodes 38 arranged in a tree structure (refer to Fig. 4) is shown. As described above, the dictionary nodes 38 are used by the company or the like that is a job offerer for specifying skill items required of a job seeker, and each has a meaning as a specific skill item. Then, in the present embodiment, each of the dictionary nodes 38 is associated in advance with all syllabuses 40 that are recognized to be related to. The management server 10 stores information related to the associations thereof.

It is determined whether the specific dictionary node 38 is associated with the specific syllabus 40 based on whether the syllabus element 42 related to the dictionary node 38 is included in the syllabus 40. It is determined whether the dictionary node 38 and the syllabus element 42 are related to each other according to a predetermined rule. For example, if both are matched, their relevance is recognized. More specifically, when the dictionary node 38 means an "internal combustion engine", all syllabuses 40 that include the "internal combustion engine" as the syllabus element 42 are associated as related to the dictionary node 38. Furthermore, as the terms related to the "internal combustion engine", synonyms and similar words such as an "engine" may be defined, and the syllabuses 40 that include these synonyms and similar words may be included in those corresponding to the "internal combustion engine".

The subject name of a subject taken does not substantially clarify the skill item that is covered by the subject. For this reason, by the comparison between the subject name itself and the dictionary node 38, it is difficult to determine whether they are matched with each other. Furthermore, the syllabus 40 itself is a set of the syllabus elements 42, that is, a set of skill elements. For this reason, by the comparison between the syllabus 40 itself and the dictionary node 38, it is also difficult to determine whether they are matched with each other.

By contrast, the syllabus element 42 is a concept indicating a single skill item in the same manner as the dictionary node 38. For this reason, for the syllabus element 42 and the dictionary node 38, it is possible to determine whether there is a match based on a comparison between the two. For this reason, if a set of specified dictionary nodes 38 and a set of syllabus elements 42 included in the syllabus 40 of the subject taken are compared with each other, a matching score between the ability required by the job offerer and the ability possessed by the job seeker can be calculated with a certain level of accuracy.

However, a syllabus may include a syllabus element related to a skill item that is not actually covered in the subject. For example, the syllabus shown in Fig. 7 clarifies that the subject of "System Control II" covers a "modern control theory" instead of a "classical control theory". In this case, the "classical control theory" may be extracted as a syllabus element though it is not covered in the subject, depending on a method of extracting it by software or manual check.

For this reason, when the dictionary node 38 and the syllabus element 42 are directly compared with each other, for the syllabus element 42 such as the above "classical control theory", a matching score is calculated as if the job seeker has the corresponding skill, although the job seeker does not possess the skill. In this regard, the technique for calculating a matching score based on the results of the direct comparison between the dictionary node 38 and the syllabus element 42 is not necessarily ideal.

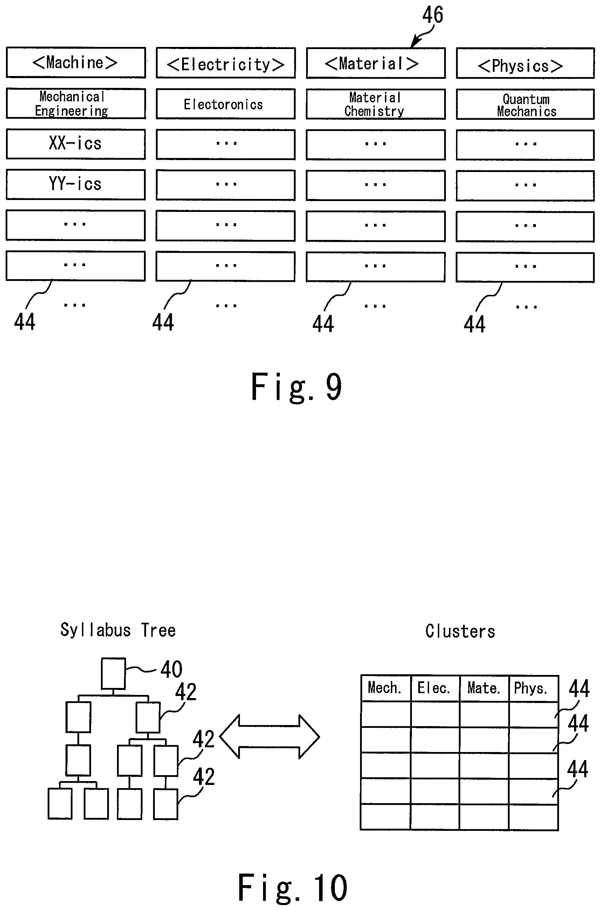

Fig. 9 shows a list of clusters 44 used in the present embodiment. The clusters 44 shown in Fig. 9 are arranged for each skill field 46. For example, they are arranged for each field 46 such as a "Machine", an "Electricity", a "Material", and a "physics". In this example, the plurality of clusters 44, to which typical subject names such as a "mechanical engineering", an "XX-ics", and an "YY-ics" are given, belong to the field 46 of the "Machine". The same applies to the other fields 46. Each cluster 44 is one of a finite number of clusters set based on the results of performing cluster analysis, which is an analysis carried out on syllabus elements extracted from a multitude of syllabuses collected from educational institutions such as universities. The total number of clusters 44 can be set arbitrarily, but may be approximately 22, for example.

Fig. 10 is a diagram for describing the association between the syllabus 40 and the cluster 44. As described above, the single syllabus 40 includes the plurality of syllabus elements 42. Each syllabus element 42 included in the same syllabus 40 may belong to clusters 44 that are different from each other. However, many of the syllabus elements 42 included in the single syllabus 40 tend to concentrated on the cluster 44 to which the syllabus 40 should belong.

In the present embodiment, the each syllabus 40 is associated only with the single cluster 44 on which the syllabus elements 42 included therein concentrate most. According to such a method, the effect of the syllabus element 42 that is not covered in the subject is suppressed, thereby allowing the syllabus 40 to be associated with the appropriate cluster 44 with a high probability. The management server 10 stores which cluster 44 each syllabus 40 is associated with, in addition to the information on the clusters 44 shown in Fig. 9.

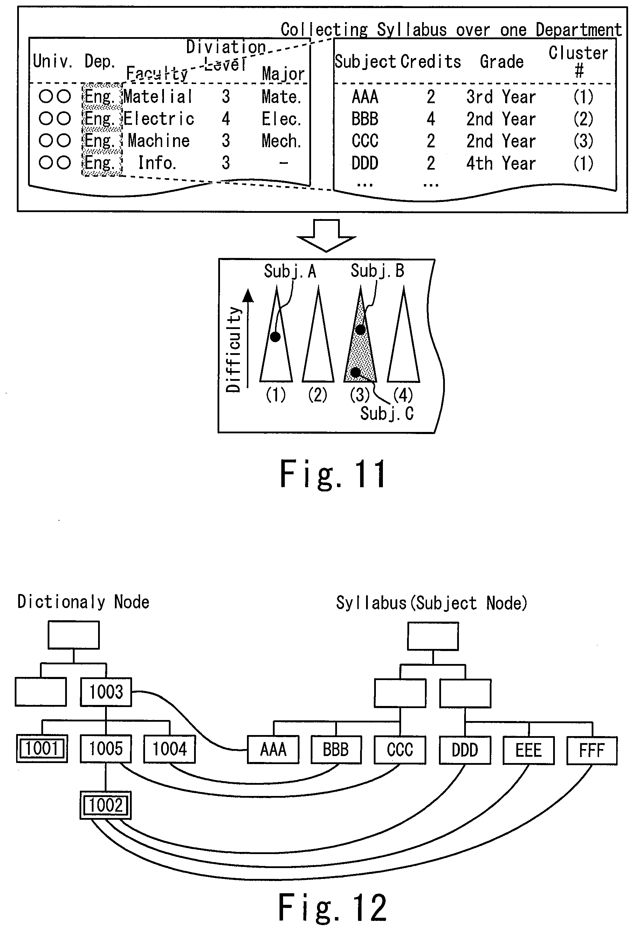

Fig. 11 is a diagram for describing a method for allocating a subject taken by a job seeker to a cluster. An upper part of Fig. 11 shows an Example in which the management server 10 arranges the information of syllabuses by an single faculty of an single university. In this example, syllabuses for each subject offered by the Faculty of Engineering of YY University are collected and associated as exemplified below.

- Subject AAA-Cluster (1)
- Subject BBB-Cluster (2)
- Subject CCC-Cluster (3)
- Subject DDD-Cluster (1)

The above "AAA" or the like is not a mere subject name, but is a unique subject name that also includes a difference of a university name and a faculty name. Hereinafter, a subject name having such a meaning may be referred to as a "subject node" as needed.

The subject information (refer to Fig. 3) submitted by a job seeker such as a student lists subjects taken. The management server 10 identifies a syllabus for each subject taken based on the university name, the faculty name, and the subject name. Hereinafter, the syllabus specified for the subject taken is particularly referred to as a "taken syllabus". After recognizing the taken syllabuses in the same number of the subjects taken, the management server 10 refers to the information shown in Fig. 11 and recognizes to which clusters these subjects taken are associated.

The lower part of Fig. 11 shows a state in which each of the subjects taken is allocated to the corresponding cluster. Here, a case is exemplified in which a subject taken A is a subject node AAA and is associated with a cluster (1), a subject taken B is a subject node CCC and is associated with a cluster (3), a subject taken C is another subject node and is associated with cluster (3). Note that Fig. 11 shows only four clusters for convenience, but there are the finite number of (for example, 22) clusters described with reference to Fig. 9.

When all subjects taken included in the subject information are allocated to appropriate clusters as shown in the lower part of Fig. 11, a distribution of the subjects taken (that is, the taken syllabuses) across the clusters can be obtained. Then, this distribution can be grasped as a distribution of skill items possessed by the job seeker. Furthermore, since the association between the taken syllabus and the cluster is substantially appropriate as described above, this distribution can be relied upon as representing the ability possessed by the job seeker.

Fig. 12 shows an example specifically showing the association between the dictionary node and the syllabus (subject node). The management server 10 stores the relationships between all dictionary nodes and syllabuses (subject nodes), and the example shown in Fig 12 is a portion thereof. In this example, dictionary nodes indicated by "1001", "1005", and "1004" are linked below the dictionary node "1003", and a dictionary node "1002" is further linked below the dictionary node "1005".

As described with reference to Fig. 8, each dictionary node is associated with all syllabuses (40) including the syllabus elements (42) corresponding to the skill item that the dictionary node (38) means. In the example shown in Fig. 12, the following associations are shown.

- The dictionary node "1003" is associated with the syllabus (subject node) of "AAA".
- The dictionary node "1004" is associated with the syllabus (subject node) of "BBB".
- The dictionary node "1005" is associated with the syllabus (subject node) "CCC".
- The dictionary node "1002" is associated with the syllabuses (subject nodes) of "DDD", "EEE", and "FFF".

In Fig. 12, "1001" and "1002" are surrounded by a double frame to indicate that these dictionary nodes are specified by the job offerer as required skill items. In this regard, the example of inputting required skill information by a job offerer is shown in the above Fig. 5. Hereinafter, as shown in Fig. 5, a case in which the job seeker requires the dictionary node "1001" with the importance level of "5" and the dictionary node "1002" with the importance level of "4" will be described.

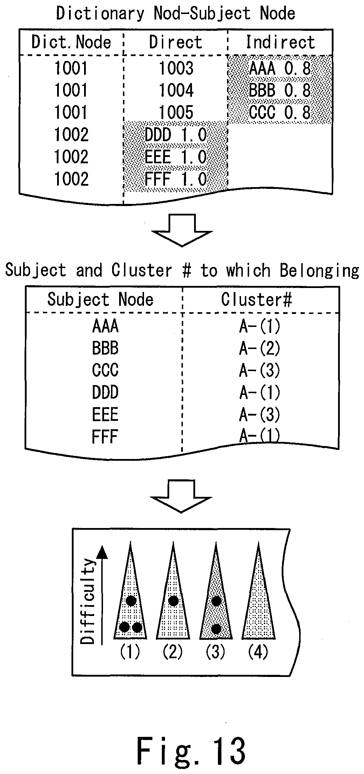

Fig. 13 is a diagram for describing a technique for allocating the dictionary nodes specified by the job offerer to clusters. The upper part of Fig. 13 shows the results of the management server 10 extracting the syllabuses (subject nodes) associated with the dictionary nodes "1001" and "1002" based on the relationships of association shown in Fig. 12.

In the present embodiment, when a specific dictionary node is specified, first, a syllabus (subject node) directly associated with the dictionary node is extracted. Hereinafter, this node is referred to as a "direct subject node". In the case in which there is no direct subject node, a syllabus (subject node) that is associated through only one other dictionary node is extracted. Hereinafter, this node is referred to as an "indirect subject node".

In the example shown in Fig. 12, the dictionary node "1001" is not directly associated with any subject node. On the other hand, the dictionary node "1001" are associated with the subject nodes "AAA", "BBB", and "CCC" through the dictionary nodes of "1003", "1004", and "1005". In this case, for the dictionary node "1001", three of "AAA", "BBB", and "CCC" are extracted as indirect subject nodes.

Syllabuses (subject nodes) of "DDD", "EEE", and "FFF" are directly associated with another specified dictionary node "1002". In this case, for the dictionary node "1002", "DDD", "EEE", and "FFF" are extracted as direct subject nodes.

In the table shown in the upper part of Fig. 13, three rows relating to the dictionary node "1001" represent the results that "AAA", "BBB", and "CCC" are extracted as indirect subject nodes by the above processing. Further, in the same table, three rows relating to the dictionary node "1002" represent the results that "DDD", "EEE", and "FFF" are extracted as direct subject nodes.

It should be noted that in the present embodiment, when a direct subject node is recognized for a specific dictionary node, an indirect subject node is not extracted. However, the present disclosure is not limited to this, and the indirect subject node may also be extracted when the direct subject node is recognized. For example, in the example shown in Fig. 12, for the dictionary node "1002", "CCC" associated through "1005" may be extracted as an indirect subject node.

Further, a table in the upper part of Fig. 13 shows that the "direct" subject node is given a weight of "1.0", and the "indirect" subject node is given a weight of "0.8". Compared to the skill of the indirect subject node, the skill of the direct subject node is considered to more satisfy the requirement of the job offerer. The above "weight" is used to reflect the difference in the matching score by a process described later.

A table shown in the middle part of Fig. 13 shows to which cluster each of "AAA", "BBB", "CCC", "DDD", "EEE", and "FFF" extracted as direct subject nodes or indirect subject nodes belong. As described above, the management server 10 stores with which cluster each syllabus is associated. Information shown in the table in the middle part of Fig. 13 is generated by the management server 10 based on the storing of the management server 10.

A lower part of Fig. 13 shows a state in which all of the extracted direct subject nodes and indirect subject nodes are allocated to the corresponding clusters. According to the information in the middle part of Fig. 13, three of "AAA", "DDD", and "FFF" belong to cluster A-(1). Furthermore, "BBB" belongs to cluster A-(2), and two of "CCC" and "EEE" belong to cluster A-(3), respectively. The lower part of Fig. 13 shows the distribution corresponding to their relationships. Note that in Fig. 13, only four clusters are shown for convenience, but there are the predetermined finite number of clusters as in the case of Fig. 11.

When all skill items (dictionary nodes) included in the required skill information are allocated to appropriate clusters as shown in the lower part of Fig. 13, it is possible to obtain a distribution of the skill items required by the job offerer across the clusters. Then, by comparing this distribution with the distribution shown in the lower part of Fig. 11, it is possible to determine how well the ability required by the job offerer and the ability possessed by the job seeker matches with each other. Hereinafter, a method will be described in which the management server 10 calculates a matching score that represents a degree of matching between the required ability and the possessed ability based on these distributions.

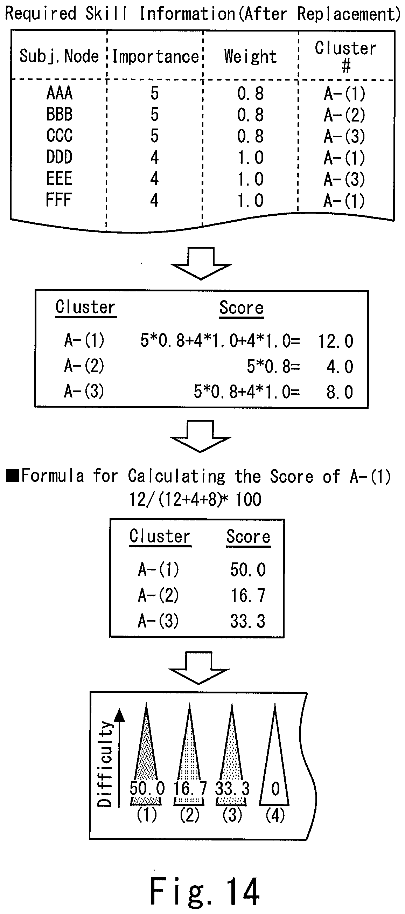

Fig. 14 is a diagram for describing a method for calculating a score allocation for each cluster based on the required skill information provided by the job offerer. A table in the upper part of Fig. 14 arranges information relating to the direct subject nodes and the indirect subject nodes extracted by the processing in Fig. 13. As described above, "AAA", "BBB", and "CCC" are the indirect subject nodes of the dictionary node "1001". As shown in Fig. 5, the importance level of "5" is given to the dictionary node "1001". Furthermore, as described above, the weight of "0.8" is given to the "indirect" subject nodes (refer to Fig. 13). In the rows of "AAA", "BBB", and "CCC" of a table of the upper part of Fig. 14, in addition to information on clusters to be associated with, information on "the importance level" and "the weight" is described.

"DDD", "EEE", and "FFF" shown in the same table are the direct subject nodes of the dictionary node "1002". In these rows, in addition to information on the clusters with which they are associated, the importance level of "4" given to the dictionary node "1002" (refer to Fig. 5) and the weight of "0.8" given to the "direct" subject node (refer to Fig. 13) are described.

A table shown in the second part of Fig. 14 shows a method for calculating the cluster total point. A calculation of the cluster total point is performed for each cluster. For one cluster, firstly, a "skill item point" is calculated for each subject node that belongs to the cluster. This "skill item point" is an integrated value of the importance level and the weight given to each subject node. When the "skill item points" are calculated for all subject nodes belonging to the cluster, they are summed. The value obtained as a result of the summation is the "cluster total point".

The table in the upper part of Fig. 14 shows that three of "AAA", "DDD", and "FFF" belong to the cluster A-(1). The importance level of "AAA" is "5", and the weight thereof is "0.8". Therefore, the skill item point of "AAA" is (5 * 0.8). As for each of "DDD" and "FFF", the importance level is "4" and the weight is "1.0". Therefore, their skill item points are both (4 * 1.0). Then, since the cluster total point is the total of the skill item points, it is obtained from the following formula.

$$\text{A-(1) cluster total point}$$

$$= (5 * 0.8) + (4 * 1.0) + (4 * 1.0)$$

$$= 12.0$$

Similarly, the cluster total points of the cluster A-(2) and the cluster A-(3) are obtained from the following formulas.

$$\text{A-(2) cluster total point} = (5 * 0.8) = 4.0$$

$$\text{A-(3) cluster total point} = (5 * 0.8) + (4 * 1.0) = 8.0$$

A table shown in the third part of Fig. 14 shows a method for calculating the score allocation given to each cluster. The score allocation for each cluster is calculated by the following formula so that the sum of the score allocations for all clusters becomes a full score of 100.

$$\text{(score allocation)} = \text{(full score)} *$$

$$\text{(cluster total point of each cluster)}/$$

$$\text{(sum of cluster total points of all clusters)}$$

In an example shown in Fig. 14, the score allocation for each cluster is calculated as follows.

$$\text{A-(1) score allocation} = 100 * 12.0/(12.0 + 4.0 + 8.0) = 50.0$$

$$\text{A-(2) score allocation} = 100 * 4.0/(12.0 + 4.0 + 8.0) = 16.7$$

$$\text{A-(3) score allocation} = 100 * 8.0/(12.0 + 4.0 + 8.0) = 33.3$$

The table in the lower part of Fig. 14 shows a state in which the score allocations are allocated to all clusters. As shown in cluster (4), for a cluster to which no direct or indirect subject node belongs, the score allocation is zero. According to the above processing, the higher allocation score is given to a cluster having a larger number of subject nodes. Furthermore, the higher the ratio of direct subject nodes is, the higher the score allocation for the cluster is. For this reason, according to the method of the present embodiment, the intention of the job offerer regarding the required skill can be appropriately reflected in the score allocation for a cluster.

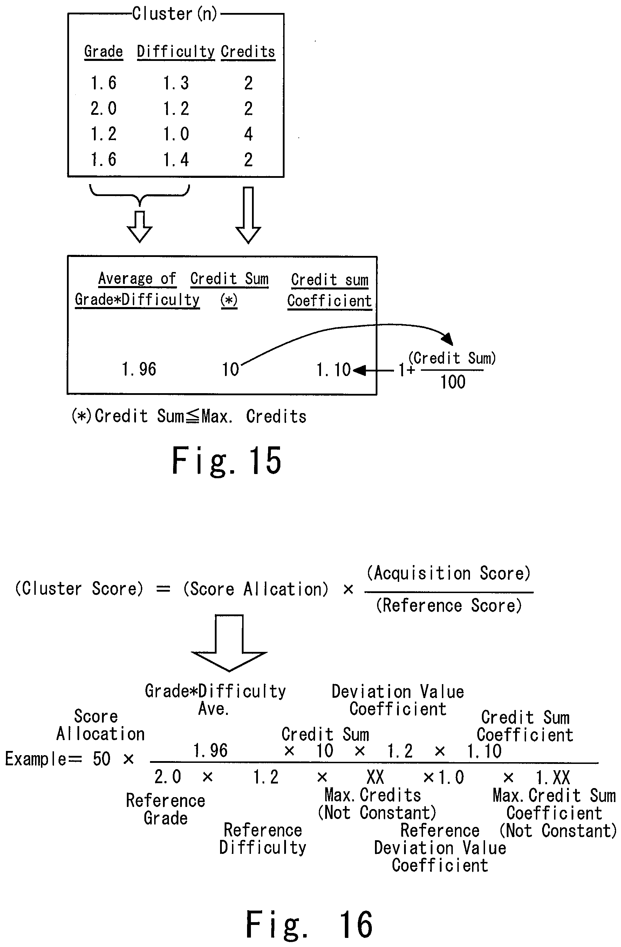

Fig. 15 is a diagram for describing a preparation process for calculating an acquisition score possessed by a job seeker for a specific cluster (n). This process is carried out for each cluster for all clusters.

As described with reference to the above Fig. 11, in the present embodiment, all subjects taken included in the subject information are allocated to any of the clusters of finite number. A table in the upper part of Fig. 15 shows an example in which four subjects taken are allocated to a cluster (n). In addition, this table shows a state in which information on the grade, the difficulty level, and the number of credits is allocated for each subject taken.

The "grade" is a value obtained by setting it newly based on values after normalization, while the normalization is done by normalizing the grade submitted as the subject information by the formula of (the grade)/(the number of levels the grade is evaluated in). In the present embodiment, all grades are reset to appropriate values within the range of 1.0 to 2.0. The "difficulty level" is set to an appropriate value within the range of 1.0 to 1.4 based on the offered year grade of each subject.

It is considered that the ability of the job seeker regarding the skill of the cluster (n) is higher as the grades of the subjects taken that belong to the cluster (n) are higher. Similarly, it is considered that the ability is higher as the difficulty levels of these subjects taken are higher and as the numbers of credits thereof are larger. The table in the lower part of Fig. 15 shows an example of calculating "Average value of (grade * difficulty level)", "credit sum", and "credit sum coefficient" for quantifying these elements.

Here, the "average of (grade * difficulty level)" is calculated to be 1.96 by applying the grades and the difficulty levels of four subjects to a predetermined rule. Furthermore, the "credit sum" is calculated to be 10 and the "credit sum coefficient" is calculated to be 1.10. The credit sum coefficient is a coefficient for quantifying that the degree of mastering of the skill significantly increases as the number of acquired credits increases, and is calculated here by the following formula.

$$\text{(credit sum coefficient)} = 1 + \text{(credit sum)}/100$$

It should be noted that in the present embodiment, the maximum number of credits is determined for each cluster. The "credit sum" described above is set with the maximum number of credits as its upper limit.

Fig. 16 is a diagram for describing a method for calculating a cluster score for a specific cluster (n). The cluster score is a score of a job seeker for each cluster. The total of all cluster scores is the matching score.

The management server 10 calculates an "acquisition score" by calculating the "average value of (grade * difficulty level)", the "credit sum", and the "credit sum coefficient" for the cluster (n), and then applying them to the following formula.

$$\text{(acquisition score)} = \text{(average value of (grade * difficulty level) )} * \text{(credit sum)}$$

$$* \text{(deviation value coefficient)} * \text{(credit sum coefficient)}$$

It should be noted that, the "deviation value coefficient" in the above formula is a value set based on the deviation value of the educational institution such as a university to which the job seeker belongs. Specifically, this deviation value coefficient becomes larger as the deviation value of each educational institution is higher. In the present embodiment, the management server 10 sets an appropriate deviation value coefficient within the range of 1.0 to 1.4 according to the deviation value read from the syllabus.

The management server 10 also calculates a "reference score" for the cluster (n). The reference score is a value assumed as a full score of the above acquisition score. Specifically, the reference score is calculated by the following formula by allocating (reference grade 2.0) to (grade), (reference difficulty level 1.2) to (difficulty level), (maximum number of credits) to (credit sum), (reference deviation value coefficient 1.0) to (deviation value coefficient), and (maximum credit sum coefficient) to (credit sum coefficient) in the above arithmetic formula, respectively:

$$\text{(reference score)} = \text{(reference grade)} * \text{(reference difficulty level)}$$

$$* \text{(maximum number of credits)}$$
$$* \text{(reference deviation value coefficient)}$$
$$* \text{(maximum credit sum coefficient)}$$

It should be noted that the maximum number of credits of the cluster (n) is a numerical value set based on the number of credits allocated to the cluster (n) when 120, which is the typical number of credits required for a student to graduate, is allocated to each cluster according to the ratio of the score allocations. Furthermore, the maximum credit sum coefficient is a credit sum coefficient calculated by applying the maximum number of credits to the credit sum.

After finishing the above calculation, the management server 10 next calculates the cluster score of the cluster (n) according to the following formula.

$$\text{(cluster score)} = \text{(score allocation)} * \text{(acquisition score)}/\text{(reference score)}$$

Assuming that the maximum number of credits of the cluster (n) is 10, the score allocation is 50, and the deviation value coefficient of the job seeker is 1.2, the cluster score is as follows.

$$\text{(cluster score)} = 50 * (1.96 * 10 * 1.2 * 1.10)/(2.0 * 1.2 * 10 * 1.0 * 1.10) = 49$$

The management server 10 calculates the cluster scores for all clusters and then sums them to generate a matching score. Each cluster score represents, in a numerical value, how well the job seeker satisfies the ability required by the job offerer regarding the skills related to the cluster. Then, the matching score, which is a sum of these values, represents, in a numerical value, how well the overall ability possessed by the job seeker satisfies the overall ability required by the job offerer.

According to such a matching score, a job offerer such as a company can accurately evaluate the ability possessed by a job seeker by utilizing all information on the contents that the job seeker has studied. Moreover, since it is not necessary to manually refer to each syllabus, the evaluation thereof can be used quite easily. On the other hand, if such a matching score is available, a job seeker such as a student can also easily find a job offerer who highly appreciates the ability possessed by himself or herself. For this reason, the matching apparatus of the present embodiment can provide an extremely beneficial effect for both the job offerer and the job seeker.

Now, in the above embodiment, in order to enhance the accuracy of the matching score, the skill items (dictionary nodes) required by the job offerer and the subjects taken by the job seeker are both expanded into clusters so as to compare clusters with each other. However, the present disclosure is not limited to this. That is, the feature of the present disclosure is that the skill items (dictionary nodes) required by the job offerer and the subject information submitted by the job seeker are compared with each other through syllabuses. The matching degree between the dictionary nodes specified by the job offerer and the syllabus elements associated with the subjects taken by the job seeker may be a matching score.

Furthermore, in the embodiment described above, each dictionary node is associated with a syllabus (subject node) (refer to Fig. 12). Then, the dictionary node is expanded into a cluster according to which cluster the subject node is associated with (refer to Fig. 13). However, the method for expanding the dictionary node into a cluster is not limited to this. For example, it may be directly defined that to which cluster each dictionary node belongs may be defined directly without using syllabuses by performing cluster analysis on all dictionary nodes.

Furthermore, in the embodiment described above, the skill items required by the job offerer and the subjects taken by the job seeker are the ones in the engineering field, but the application of the present disclosure is not limited to the engineering field. That is, the present disclosure can be applied to various fields of job offering and job seeking such as a legal field, an economic field, and a creative field.

Furthermore, in the embodiment described above, the management server 10 is configured to be connected to the job offerer terminal 14 and the job seeker terminal 16 via the network 12, but the present disclosure is not limited to this configuration. For example, a stand-alone configuration in which information on the job offerer and information on the job seeker are input from an input interface of the management server 10 may be used.

Furthermore, in the embodiment descried above, when the dictionary node specified by the job offerer is expanded into a cluster, a direct subject node and an indirect subject node are extracted, but this configuration is not essential. For example, extraction of the indirect subject node may be omitted.

It should be noted in the embodiment described above, the dictionary nodes "1001" and "1002" specified by the job offerer, and the indirect subject nodes "AAA", "BBB", "CCC" and the direct subject nodes "DDD", "EEE", and "FFF" to be associated with the dictionary nodes "1001" and "1002" correspond to the "skill items" in the first aspect of the present disclosure of the present disclosure, and information in which the "importance level" is added to the skill items corresponds to the "required skill information" in the first aspect of the present disclosure of the present disclosure, and the management server 10 implements the "first reception unit" in the first aspect of the present disclosure by generating the required skill information. Furthermore, in the above embodiment, the management server 10 implements the "first storage unit" in the first aspect of the present disclosure by storing the above required skill information, the "second reception unit" in the first aspect of the present disclosure by receiving information on the subjects taken and the grades thereof as shown in Fig. 3 from the job seeker terminal 16, the "second storage unit" in the first aspect of the present disclosure by storing the information, the "third reception unit" in the first aspect of the present disclosure by receiving syllabuses regarding respective subject, and the "third storage unit" in the first aspect of the present disclosure by storing these syllabuses, respectively. Furthermore, in the above embodiment, the management server 10 implements the "score calculation unit" in the first aspect of the present disclosure by calculating the matching score, the "extraction process" in the first aspect of the present disclosure by extracting the taken syllabuses associated with the subjects taken as shown in Fig. 11 in the calculation, and the "score calculation process" in the first aspect of the present disclosure by calculating the matching score based on the cluster distribution of the subjects taken as shown in Fig. 11 and the cluster distribution of the subject nodes as shown in fig. 13, respectively.

Furthermore, in the embodiment described above, the fields of the skills allocated to each cluster shown in Fig. 9 corresponds to the "skill group" in the second aspect of the present disclosure, and the management server 10 implements the "fourth storage unit" in the second aspect of the present disclosure by storing information shown in Fig 9. Furthermore, the rule for association between the syllabus 40 and the clusters shown in Fig. 10 corresponds to the "syllabus-cluster connection rule" in the second aspect of the present disclosure, and the management server 10 implements the "fifth storage unit" in the second aspect of the present disclosure by storing the rule. Furthermore, the management server 10 implements the "syllabus allocation process" in the second aspect of the present disclosure by allocating each of the taken syllabuses to a cluster as shown in Fig. 11, the "skill item allocation process" in the second aspect of the present disclosure by allocating each of the skill items (dictionary nodes) to a cluster as shown in Fig. 13, and the "calculation execution process" in the second aspect of the present disclosure by calculating the matching score based on their distributions, respectively.

Furthermore, in the embodiment described above, the rule for association between the skill items (dictionary nodes) and the syllabuses as shown in Fig. 12 corresponds to the "skill item-syllabus connection rule" in the third aspect of the present disclosure, and the management server 10 implements the "sixth storage unit" in the third aspect of the present disclosure by storing the rule. Furthermore, the management server 10 implements the "skill item-syllabus connection process" in the third aspect of the present disclosure by associating the specified dictionary nodes "1001" and "1002" with the corresponding syllabuses "AAA" to "FFF" as shown in Fig. 12, and the "determination process" in the third aspect of the present disclosure by determining the clusters A-(1) to A-(3) to be associated with these syllabus as shown in the middle part of Fig. 13, respectively.

Furthermore, in the embodiment described above, the management server 10 implements the "score allocation setting process" in the fourth aspect of the present disclosure by allocating the score allocation to each cluster according to the procedure shown in Fig. 14, the "acquisition score calculation process" in the fourth aspect of the present disclosure by calculating the acquisition score for each cluster according to the procedures shown in Figs. 15 and 16, the "reference score calculation process" in the fourth aspect of the present disclosure by calculating the reference score for each cluster, and the "cluster score calculation process" in the fourth aspect of the present disclosure by calculating the cluster score based on the reference score for each cluster, respectively.

Furthermore, in the embodiment described above, the management server 10 implements the "skill item point setting process" in the fifth aspect of the present disclosure by calculating the skill item points (5 * 0.8, 4 * 1.0, and the like) in which the importance level is reflected for each subject node as shown in Fig. 14.

Furthermore, in the embodiment described above, the management server 10 implements the "seventh storage unit" in the sixth aspect of the present disclosure by storing the dictionary node tree as shown in Fig. 4 or Fig. 12, and the "eighth storage unit" in the six aspect of the present disclosure by storing information on the "weight" as shown in the upper part of Fig. 13, respectively.

**Description of Reference Numerals**

| 10 a | management server |
| 14 | a job offerer terminal |
| 16 | a job seeker terminal |
| 34 | a grade input screen |
| 36 | a dictionary node tree |
| 38 | a dictionary node |
| 42 | a syllabus element |
| 44 | a cluster |

**Claims**

1. A matching apparatus using syllabuses, comprising:

   a first reception unit for generating required skill information that includes a set of skill items required by a job offerer;
   a first storage unit for storing the required skill information;
   a second reception unit for receiving an input of subject information that is information on subjects taken by a job seeker;
   a second storage unit for storing the subject information;
   a third reception unit for receiving syllabuses defined for respective subjects;
   a third storage unit for storing information of a syllabus group that is a set of various syllabuses; and
   a score calculation unit for calculating a matching score between an ability required by the job offerer and an ability possessed by the job seeker based on the required skill information, the subject information, and the information on the syllabus group, wherein
   the score calculation unit performs:

      an extraction process for extracting a syllabus associated with each subject taken, which is included in the subject information, as a taken syllabus from the third storage unit; and
      a score calculation process for calculating the matching score based on a set of syllabus elements included in the taken syllabus as terms related to skills and the required skill information.

2. The matching apparatus according to claim 1, further comprising:

   a fourth storage unit for storing which skill group each of a plurality of predefined clusters is allocated to; and
   a fifth storage unit for storing a syllabus-cluster connection rule that defines which of the plurality of clusters each of the syllabuses is associated with, wherein
which of the plurality of clusters each syllabus is associated with is determined based on a set of syllabus elements included in the syllabus, and
the score calculation process includes:

a syllabus allocation process for allocating each taken syllabus to an appropriate cluster according to the syllabus-cluster connection rule;
a skill item allocation process for allocating each skill item included in the required skill information to a cluster that covers a skill group to which the skill item should belong; and
a calculation execution process for calculating the matching score based on a comparison between a distribution of the taken syllabuses allocated to the plurality of clusters and a distribution of the skill items.

3.  The matching apparatus according to claim 2, further comprising:

a sixth storage unit for storing a skill item-syllabus connection rule that defines which of the syllabuses each of the skill items is associated with; wherein
whether each skill item is associated with each syllabus is determined based on whether a syllabus element corresponding to the skill item is included in the syllabus, and
the skill item allocation process includes:

a skill item-syllabus connection process for associating each of the skill items included in the required skill information with a corresponding syllabus according to the skill item-syllabus connection rule;
a determination process for determining a cluster to be associated with the corresponding syllabus according to the syllabus-cluster connection rule; and
a process for allocating each of the skill items to a cluster determined by the determination process.

4.  The matching apparatus according to claim 2 or 3, wherein
the calculation execution process includes:

a score allocation setting process for allocating a score allocation to each cluster based on the distribution of the skill items in such a manner the total of the score allocations allocated to all clusters becomes a full score;
an acquisition score calculation process for calculating, for each cluster, an acquisition score based on a grade and the number of credits of the subject taken that is associated with the taken syllabus allocated to the cluster;
a reference score calculation process for calculating, for each cluster, the acquisition score as a reference score in the case in which the grade is a reference grade and the number of credits is a reference number of credits;
a cluster score calculation process for calculating, for each cluster, a cluster score according to the following formula, and

$$(\text{cluster score}) = (\text{score allocation}) \times (\text{acquisition score})/(\text{reference score})$$

a process for calculating a sum of the cluster scores of all clusters as the matching score.

5.  The matching apparatus according to claim 4, wherein:

the required skill information includes an importance level defined for each skill item; and
the score allocation setting process includes for each skill item included in the required skill information:

a skill item point setting process for setting a skill item point in which the importance level is reflected;
a process for calculating, for each cluster, a cluster total point by totaling the skill item points; and
a process for calculating a score allocation for each cluster according to the following formula

$$(\text{score allocation}) = (\text{full score}) * (\text{cluster total point of the cluster})/(\text{sum of cluster total points of all clusters}).$$

6. The matching apparatus according to claim 5, further comprising:

a seventh storage unit for storing a dictionary node tree in which a set of the skill items are arranged in a tree structure according to relevance to skills, wherein
the skill items that the job offerer seeks include a direct skill item that is directly specified through the first reception unit, and an indirect skill item that has a close relation with the direct skill item in the dictionary node tree; and
an eighth storage unit for storing a weight applied to each of the direct skill item and the indirect skill item, wherein the skill item point setting process further includes a process for reflecting the weight of the direct skill item in the skill item point of the direct skill item and reflecting the weight of the indirect skill item in the skill item point of the indirect skill item.

7. The matching apparatus according to any one of claims 4 to 6, wherein
the syllabus includes information on a deviation value of an educational institution that offers the subject, and
the acquisition score calculation process includes a process for reflecting, in the acquisition score, the deviation value of the educational institution that offers the subjects taken.

8. The matching apparatus according to any one of claims 4 to 7, wherein
the syllabus includes information on a difficulty level of the subject, and
the acquisition score calculation process includes a process for reflecting the difficulty level of the subject taken in the acquisition score.

Fig. 1

| | |
|---|---|
| 18 — CPU | Communication Interface — 28 |
| 22 — ROM | Operation Unit — 30 |
| 24 — RAM | Display Unit — 32 |
| 26 — Storage | |

20 — 10

Fig. 2

16

Input
Grades

000 University
(Deviation Value 66) —— 34

| Subject | Grade |
|---------|-------|
| Fluid Dynamics | A |
| Solid Mechanics | B |
| Thermodynamics | C |

# Fig. 3

Fig. 4

| Dictionary Node | Importance |
| --- | --- |
| 1001 | 5 |
| 1002 | 4 |

# Fig. 5

| Name of University (Name of Institution) |
| --- |
| Faculty |
| Department/Major |
| Offered Year Grade |
| Number of Credits |
| Name of Subject |
| Outline of Subject |
| Goal of Study |
| Plan of Subject |
| ID of Subject |
| Grade (Scale is Standardized) |
| Rank of University |

# Fig. 6

" System Control II"
Department of Mechanical Systems Engineering
Faculty of Engineering
YY University

"System Control I, II" has dealt with the analysis and design of control systems in the frequency domain using a basic control theory called classical control theory. This lecture explains a method to analyze and design a control system in the time domain using control theory called modern control theory.

## Fig. 7

Dictionary Node Tree 36

Syllabus Tree

## Fig. 8

| <Machine> | <Electricity> | <Material> | <Physics> |
|---|---|---|---|
| Mechanical Engineering | Electoronics | Material Chemistry | Quantum Mechanics |
| XX-ics | ... | ... | ... |
| YY-ics | ... | ... | ... |
| ... | ... | ... | ... |
| ... | ... | ... | ... |
| ... | ... | ... | ... |

46

44    44    44    44

## Fig. 9

Syllabus Tree

40
42
42
42

Clusters

| Mech. | Elec. | Mate. | Phys. |
|---|---|---|---|
|  |  |  |  |
|  |  |  |  |
|  |  |  |  |
|  |  |  |  |
|  |  |  |  |

44
44
44

## Fig. 10

Collecting Syllabus over one Department

| Univ. | Dep. | Diviation | | | Subject | Credits | Grade | Cluster # |
| | | Faculty | Level | Major | | | | |
|---|---|---|---|---|---|---|---|---|
| ○○ | Eng. | Matelial | 3 | Mate. | AAA | 2 | 3rd Year | (1) |
| ○○ | Eng. | Electric | 4 | Elec. | BBB | 4 | 2nd Year | (2) |
| ○○ | Eng. | Machine | 3 | Mech. | CCC | 2 | 2nd Year | (3) |
| ○○ | Eng. | Info. | 3 | – | DDD | 2 | 4th Year | (1) |
| | | | | | ... | ... | | |

Fig. 11

Dictionaly Node                          Syllabus(Subject Node)

Fig. 12

Dictionary Nod-Subject Node

| Dict.Node | Direct | Indirect |
|-----------|--------|----------|
| 1001 | 1003 | AAA 0.8 |
| 1001 | 1004 | BBB 0.8 |
| 1001 | 1005 | CCC 0.8 |
| 1002 | DDD 1.0 | |
| 1002 | EEE 1.0 | |
| 1002 | FFF 1.0 | |

Subject and Cluster # to which Belonging

| Subject Node | Cluster# |
|--------------|----------|
| AAA | A-(1) |
| BBB | A-(2) |
| CCC | A-(3) |
| DDD | A-(1) |
| EEE | A-(3) |
| FFF | A-(1) |

Fig. 13

Required Skill Information(After Replacement)

| Subj. Node | Importance | Weight | Cluster # |
|------------|------------|--------|-----------|
| AAA | 5 | 0.8 | A-(1) |
| BBB | 5 | 0.8 | A-(2) |
| CCC | 5 | 0.8 | A-(3) |
| DDD | 4 | 1.0 | A-(1) |
| EEE | 4 | 1.0 | A-(3) |
| FFF | 4 | 1.0 | A-(1) |

| Cluster | Score | |
|---------|-------|---|
| A-(1) | 5*0.8+4*1.0+4*1.0= | 12.0 |
| A-(2) | 5*0.8= | 4.0 |
| A-(3) | 5*0.8+4*1.0= | 8.0 |

■Formula for Calculating the Score of A-(1)

$$12/(12+4+8)* 100$$

| Cluster | Score |
|---------|-------|
| A-(1) | 50.0 |
| A-(2) | 16.7 |
| A-(3) | 33.3 |

Fig. 14

Cluster (n)

| Grade | Difficulty | Credits |
|-------|-----------|---------|
| 1.6 | 1.3 | 2 |
| 2.0 | 1.2 | 2 |
| 1.2 | 1.0 | 4 |
| 1.6 | 1.4 | 2 |

| Average of Grade*Difficulty | Credit Sum (*) | Credit sum Coefficient |
|-----------------------------|----------------|------------------------|
| 1.96 | 10 | 1.10 |

$$1 + \frac{(\text{Credit Sum})}{100}$$

(*) Credit Sum ≦ Max. Credits

# Fig. 15

$$(\text{Cluster Score}) = (\text{Score Allcation}) \times \frac{(\text{Acquisition Score})}{(\text{Reference Score})}$$

Score Allocation
Example = 50 ×
$$\frac{\overset{\text{Grade*Difficulty Ave.}}{1.96} \times \overset{\text{Credit Sum}}{10} \times \overset{\text{Deviation Value Coefficient}}{1.2} \times \overset{\text{Credit Sum Coefficient}}{1.10}}{\underset{\text{Reference Grade}}{2.0} \times \underset{\text{Reference Difficulty}}{1.2} \times \underset{\substack{\text{Max.Credits} \\ \text{(Not Constant)}}}{XX} \times \underset{\substack{\text{Reference} \\ \text{Deviation Value} \\ \text{Coefficient}}}{1.0} \times \underset{\substack{\text{Max.Credit Sum} \\ \text{Coefficient} \\ \text{(Not Constant)}}}{1.XX}}$$

# Fig. 16

**EP 3 770 836 A1**

<table>
<tr>
<td colspan="2" align="center">**INTERNATIONAL SEARCH REPORT**</td>
<td>International application No.<br>PCT/JP2018/030830</td>
</tr>
</table>

A. CLASSIFICATION OF SUBJECT MATTER
Int.Cl. G06Q10/10(2012.01)i

According to International Patent Classification (IPC) or to both national classification and IPC

B. FIELDS SEARCHED

Minimum documentation searched (classification system followed by classification symbols)
Int.Cl. G06Q10/10

Documentation searched other than minimum documentation to the extent that such documents are included in the fields searched
Published examined utility model applications of Japan    1922-1996
Published unexamined utility model applications of Japan  1971-2018
Registered utility model specifications of Japan          1996-2018
Published registered utility model applications of Japan  1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-44280 A (JSL KK) 17 February 2005, entire text, all drawings (Family: none) | 1-8 |
| A | JP 11-338881 A (RECRUIT CO., LTD.) 10 December 1999, entire text, all drawings (Family: none) | 1-8 |
| A | JP 2004-240925 A (ARGO INTELLIGENT SERVICE KK) 26 August 2004, entire text, all drawings (Family: none) | 1-8 |

☒ Further documents are listed in the continuation of Box C.     ☐ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>01.10.2018 | Date of mailing of the international search report<br>09.10.2018 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

27

**INTERNATIONAL SEARCH REPORT**

International application No.

PCT/JP2018/030830

C (Continuation). DOCUMENTS CONSIDERED TO BE RELEVANT

| Category* | Citation of document, with indication, where appropriate, of the relevant passages | Relevant to claim No. |
|---|---|---|
| A | US 2011/0231330 A1 (CHUNG YUAN CHRISTIAN UNIVERSITY) 22 September 2011, entire text, all drawings & TW 201133362 A | 1-8 |
| A | ▲高▼橋 和生, 技術用語の類似度を用いた研究室配属支援システムの検討, 電子情報通信学会技術研究報告, 14 January 2016, vol. 115, no. 410, pp. 47-51, ISSN 0913-5685, (TAKAHASHI, Kazuo, Study on the laboratory assignment support system using the technical terms similarity, IEICE Technical Report) | 1-8 |
| A | 野澤 孝之, シラバス-専門用語の相互クラスタリングを用いたカリキュラム分析システムの改善, 知能と情報, 15 October 2005, vol. 17, no. 5, pp. 569-586, ISSN 1347-7986, (NOZAWA, Takayuki, Improvement of curriculum analyzing system utilizing syllabus-term co-clustering, Journal of Japan Society for Fuzzy Theory and Intelligent Informatics) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003162651 A